# FASCICULE DE BREVET EUROPEEN

(11) **EP 0 931 495 B1**
(45) Date de publication et mention de la délivrance du brevet: **13.11.2002**
(21) Numéro de dépôt: 99400013.1
(22) Date de dépôt: 05.01.1999
(51) Int. Cl.: A47J 45/06

(54) **Ustensile de cuisson comportant une sonde de températue intégrée dans le fond de cet ustensile**
Küchengerät mit einer in seinem Boden eingebauten Temperatursonde
Kitchen utensil comprising a temperature sensing device integrated in the bottom of the utensil

(30) Priorité: 23.01.1998 FR 9800734
(43) Date de publication de la demande: 28.07.1999
(73) Titulaire: SEB S.A., 69130 Ecully (FR)
(72) Inventeur: Adamczewski, David, 74150 Massigny (FR)
(74) Mandataire: Keib, Gérard

(56) Documents cités:
- DE-A- 2 014 411
- FR-A- 2 664 148
- US-A- 3 742 178
- US-A- 4 541 733
- US-A- 5 441 344
- PATENT ABSTRACTS OF JAPAN vol. 013, no. 149 (P-855), 12 avril 1989 & JP 63 311130 A (MATSUSHITA ELECTRIC WORKS LTD), 19 décembre 1988

## Description

La présente invention concerne un ustensile de cuisson tel que poêle ou casserole comportant un fond et une paroi latérale.

On connaît notamment selon le brevet américain 5 441 344 un ustensile de cuisson comportant une sonde de température telle qu'un thermocouple, intégrée dans le fond de l'ustensile.

Le thermocouple délivre une tension qui est fonction de la température.

Cette tension est traitée par un circuit électronique qui la transforme en unités de température qui sont affichées sur la poignée de l'ustensile.

L'intégration de la sonde de température dans le fond de l'ustensile est une opération compliquée qui grève le coût de fabrication et pose un problème d'étanchéité vis-à-vis de l'humidité, en particulier vis-à-vis de l'eau de lavage, étant donné que cette sonde et les conducteurs électriques connectés à celle-ci doivent être préservés de tout risque de contact avec l'humidité.

Le but de la présente invention est de remédier au problème ci-dessus.

L'invention vise ainsi un ustensile de cuisson comportant un fond et une paroi latérale, une sonde de température intégrée dans ledit fond reliée à un circuit électronique pour traiter la grandeur mesurée par la sonde et afficher la température.

Suivant l'invention, cet ustensile de cuisson est caractérisé en ce que la sonde de température et les conducteurs électriques reliant cette sonde au circuit électronique s'étendent entre la paroi qui constitue le fond de l'ustensile et une plaque perforée fixée par frappe à froid sur ladite paroi.

Les parois de fond et latérale de l'ustensile sont réalisées par exemple à partir d'un disque en aluminium, tandis que la plaque perforée fixée par frappe à froid est de préférence en acier inoxydable.

Le procédé de fixation par frappe à froid de la plaque perforée ci-dessus sur le fond de l'ustensile, a été décrit notamment dans les brevets français n°2 693 894 et n°2 711 051 au nom de la Demanderesse.

Lors de la mise en oeuvre du procédé ci-dessus, le métal du fond de l'ustensile pénètre dans les perforations de la plaque, ce qui assure un excellent ancrage de la plaque perforée par rapport au métal du fond de l'ustensile.

Conformément à l'invention, la plaque perforée fixée par frappe à froid sur le fond de l'ustensile, réalise simultanément les deux fonctions suivantes :
- elle permet au fond de l'ustensile de mieux résister aux déformations provoquées par les brusques variations de la dilatation thermique dudit fond ;
- elle permet de protéger la sonde de température et les conducteurs électriques reliés à celle-ci vis-à-vis de l'humidité, des chocs mécaniques et du contact direct du brûleur d'une plaque de cuisson à gaz.

La sonde de température peut être un thermocouple, une résistance à coefficient de température négatif (CTN) ou positif (CTP), une PT100, une thermistance....

Dans le cas du thermocouple le circuit électronique associé à la sonde détecte, lorsque la température varie, une variation de la tension.

Dans les autres cas, le circuit électronique détecte une variation de la valeur ohmique de la résistance.

Selon une version préférée de l'invention, ladite sonde est située sur la surface extérieure dudit fond près du centre de celui-ci, ladite plaque perforée comprenant une partie qui recouvre ladite sonde et une partie centrale de la surface extérieure dudit fond et une partie allongée qui recouvre lesdits conducteurs électriques et s'étend radialement sur la surface extérieure du fond et au moins partiellement sur la paroi latérale de l'ustensile.

De préférence également, la sonde et les conducteurs sont logés dans une rainure.

Avantageusement, la rainure est formée sur la surface extérieure de la paroi qui constitue le fond de l'ustensile.

Selon une version préférentielle, le circuit électronique et les moyens d'affichage de la température sont logés dans un boîtier fixé à la poignée de l'ustensile.

Ce boîtier est de préférence fixé d'une manière détachable de la poignée, ce qui permet de l'enlever, avant l'introduction de l'ustensile dans un bac de lavage ou un lave-vaisselle.

D'autres particularités et avantages de l'invention apparaîtront encore dans la description ci-après.

Aux dessins annexés, donnés à titre d'exemples non limitatifs ;

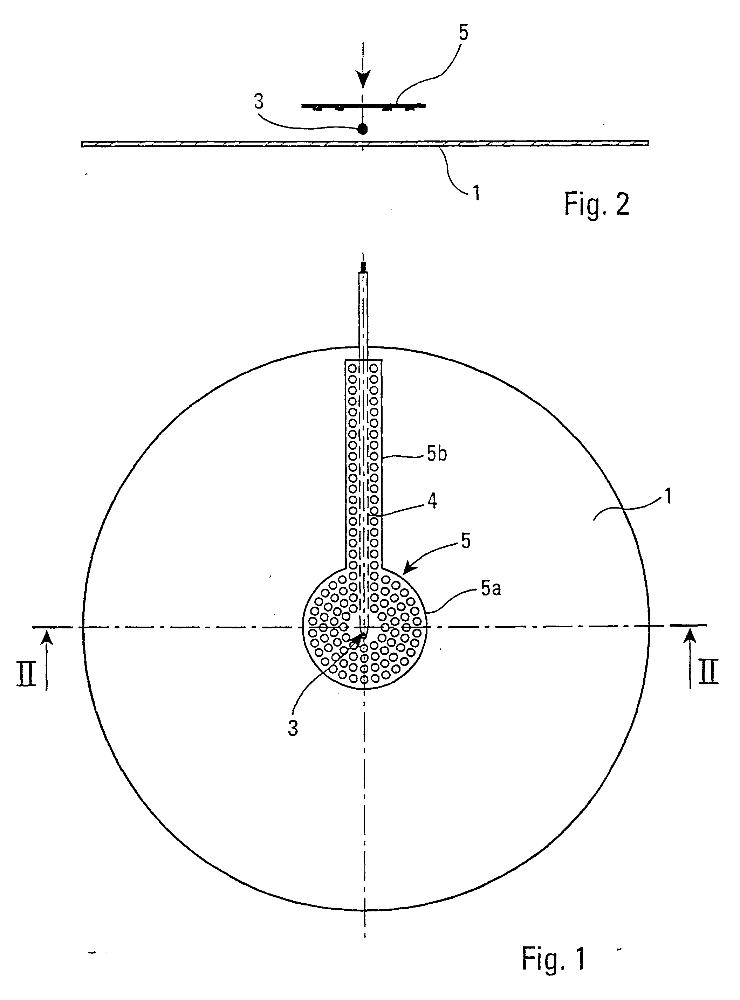

- la figure 1 est une vue en plan montrant le disque métallique avant emboutissage sur lequel a été fixée une plaque recouvrant une sonde de température et des conducteurs de liaison ;
- la figure 2 est une vue en coupe suivant le plan II-II de la figure 1 illustrant schématiquement le procédé de fixation de la plaque perforée et de la sonde thermique sur un disque avant emboutissage de celui-ci en forme de récipient ;
- les figures 3 et 4 sont des vues analogues aux figures 1 et 2 montrant la fixation de la plaque et de la sonde sur un récipient de cuisson préalablement embouti ;
- la figure 5 est une vue en coupe partielle à plus grande échelle, de la plaque perforée, de la sonde et du fond de l'ustensile, avant fixation par frappe ;
- la figure 6 est une vue analogue à la figure 5, montrant l'ensemble après fixation par frappe ;
- la figure 7 est une vue en plan partielle montrant la plaque perforée recouvrant la sonde thermique ;
- la figure 8 est une vue en coupe d'une poêle dont la poignée comporte un boîtier comprenant un circuit électronique et des moyens d'affichage de la température ;
- la figure 9 est une vue analogue à la figure 8 montrant que le boîtier électronique est détachable de la poignée.

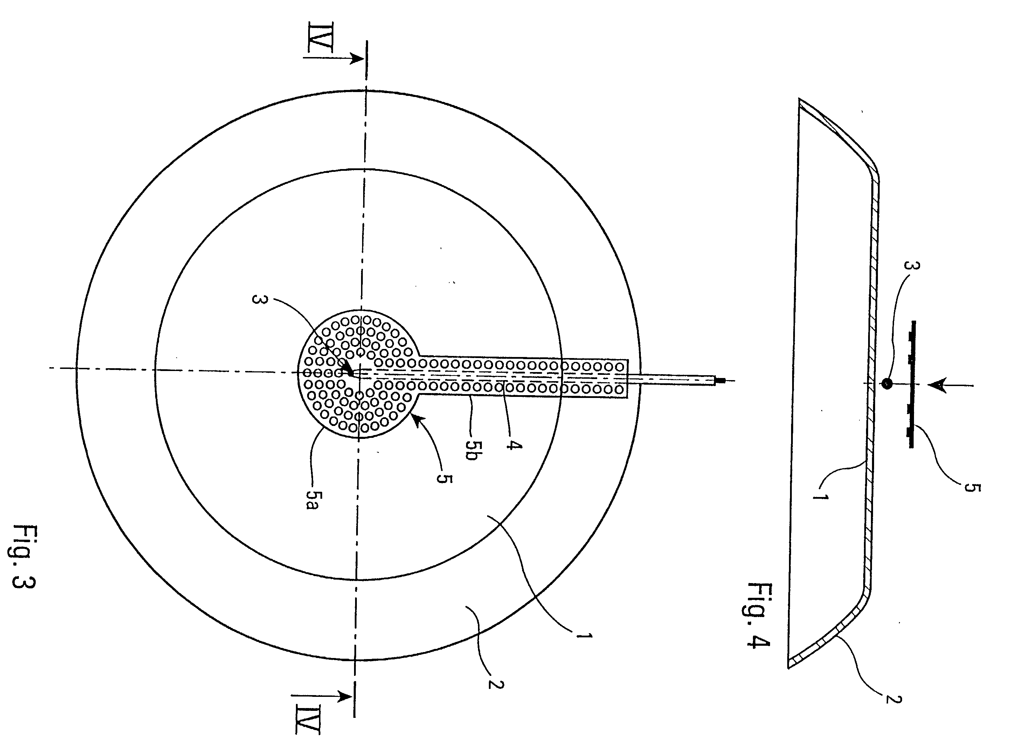

La figure 3 représente une poêle comportant un fond 1 et une paroi latérale 2 réalisés à partir d'un disque par exemple en aluminium.

Une sonde de température 3 est intégrée dans le fond 1. Cette sonde 3 est reliée à un circuit électronique pour traiter la grandeur mesurée par cette sonde 3 et afficher la température.

Conformément à l'invention, la sonde de température 3 et les conducteurs électriques 4 reliant cette sonde 3 au circuit électronique s'étendent entre la paroi 1 qui constitue le fond de l'ustensile et une plaque perforée 5, par exemple en acier inoxydable, fixée par frappe à froid sur la paroi 1 précitée.

Dans l'exemple représenté, la sonde 3 est située sur la surface extérieure du fond 1 près du centre de celui-ci.

La plaque perforée 5 comprend une partie circulaire 5a qui recouvre la sonde 3 et une partie centrale de la surface extérieure du fond 1 et une partie allongée 5b qui recouvre les conducteurs électriques 4 et s'étend radialement sur la surface extérieure du fond 1 et au moins partiellement sur la paroi latérale 2 de la poêle.

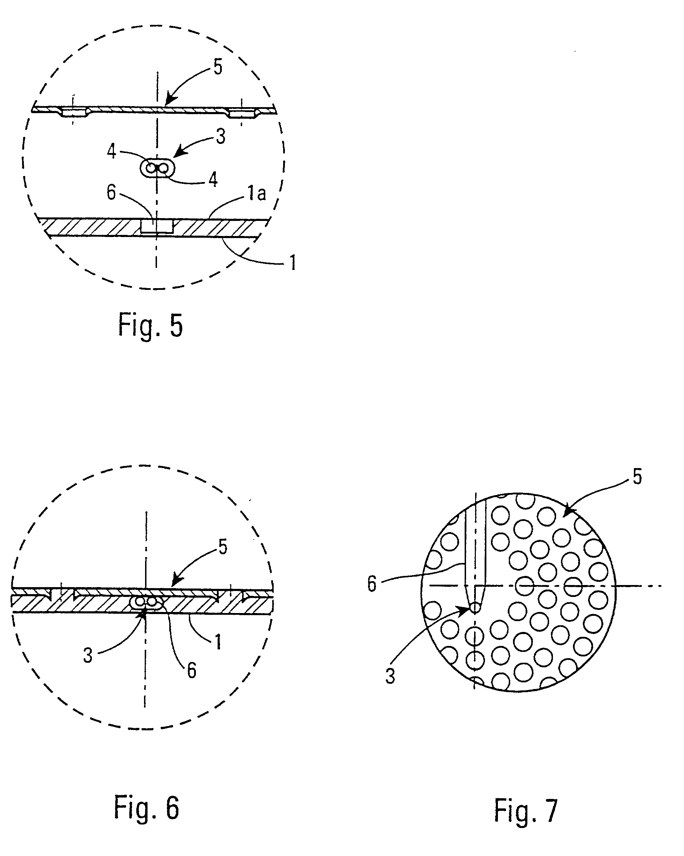

Les figures 5 à 7 montrent que la sonde 3 et les conducteurs 4 sont logés dans une rainure 6 qui est formée sur la surface extérieure la de la paroi qui constitue le fond 1 de l'ustensile.

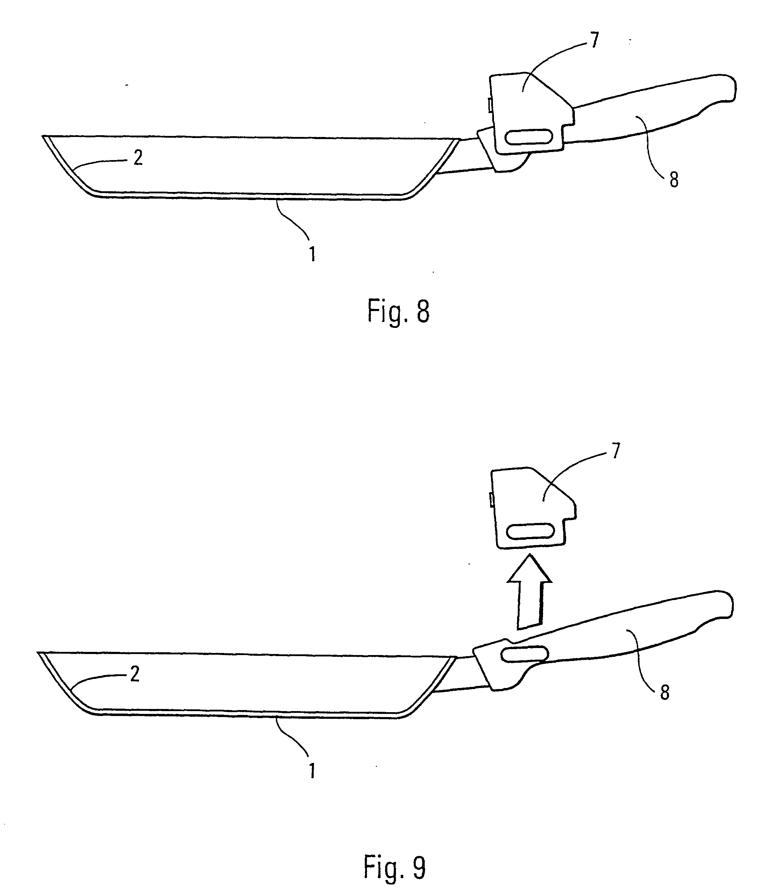

Dans l'exemple représenté sur les figures 8 et 9, le circuit électronique et les moyens d'affichage de la température sont logés dans un boîtier 7 fixé de façon détachable de la poignée 8 de la poêle, ce qui permet d'enlever ce boîtier 7 avant d'introduire la poêle dans un lave-vaisselle.

Pour comprendre le procédé de fixation de la plaque perforée 5 sur le fond 1 de l'ustensile avant ou après emboutissage de celui-ci, on se reportera à la description des brevets français n°2 693 894 et n°2 711 051.

Après l'opération de frappe à froid, la plaque perforée 5 est solidement ancrée sur la surface du fond 1 comme montré notamment par la figure 6 et recouvre, de façon étanche à l'eau, la sonde thermique 3 et les conducteurs électriques 4 qui relient cette sonde 3 au boîtier électronique 7.

Dans cette position, la sonde 3 est parfaitement intégrée dans le fond de l'ustensile de cuisson et elle est apte à mesurer dans des conditions optimales la température de ce fond.

Bien entendu, l'invention n'est pas limitée à l'exemple de réalisation que l'on vient de décrire et on peut apporter à celui-ci de nombreuses modifications dans le cadre des présentes revendications.

Ainsi, le boîtier électronique d'affichage de la température au lieu d'être fixé de façon détachable sur la poignée de l'ustensile, pourrait être fixé à une poignée elle-même détachable de l'ustensile.

## Revendications

1. Ustensile de cuisson comportant un fond (1) et une paroi latérale (2), une sonde de température (3) intégrée dans ledit fond (1) reliée à un circuit électronique pour traiter la grandeur mesurée par la sonde et afficher la température, **caractérisé en ce que** la sonde de température (3) et les conducteurs électriques (4) reliant cette sonde au circuit électronique s'étendent entre la paroi qui constitue le fond (1) de l'ustensile et une plaque perforée (5) fixée par frappe à froid sur ladite paroi.

2. Ustensile conforme à la revendication 1, **caractérisé en ce que** ladite sonde (3) est située sur la surface extérieure dudit fond (1) près du centre de celui-ci, ladite plaque perforée (5) comprenant une partie (5a) qui recouvre ladite sonde (3) et une partie centrale de la surface extérieure dudit fond (1) et une partie allongée (5b) qui recouvre lesdits conducteurs électriques (4) et s'étend radialement sur la surface extérieure du fond et au moins partiellement sur la paroi latérale (2) de l'ustensile.

3. Ustensile conforme à l'une des revendications 1 ou 2, **caractérisé en ce que** la sonde (3) et les conducteurs (4) sont logés dans une rainure (6).

4. Ustensile conforme à la revendication 3, **caractérisé en ce que** la rainure (6) est formée sur la surface extérieure de la paroi qui constitue le fond (1) de l'ustensile.

5. Ustensile conforme à l'une des revendications 1 à 4, **caractérisé en ce que** le circuit électronique et les moyens d'affichage de la température sont logés dans un boîtier (7) fixé à la poignée (8) de l'ustensile.

6. Ustensile conforme à la revendication 5, **caractérisé en ce que** ledit boîtier (7) est fixé d'une manière détachable à ladite poignée (8).

## Patentansprüche

1. Küchengerät mit einem Boden (1) und einer Seitenwand (2), einer in den Boden (1) integrierten an einen elektronischen Kreis angeschlossenen Temperatursonde (3), um den mit der Sonde gemessenen Wert zu verarbeiten, **dadurch gekennzeichnet, dass** die Temperatursonde (3) und die elektrischen Leitungen (4), die die Sonde mit dem elektronischen Kreis verbinden, sich zwischen der Wand, die den Boden (1) des Gerätes bildet und einer perforierten mit der Wand durch Kaltschlagen verbundenen Scheibe (5) erstreckt.

2. Gerät nach Anspruch 1, **dadurch gekennzeichnet, dass** die Sonde (3) auf der Außenfläche des Bodens (1) nahen dessen Mitte angeordnet ist, wobei die perforierte Scheibe (5) einen Teil (5a) umfasst, welcher die Sonde (3) und einen zentralen Teil der Außenfläche des Bodens (1) bedeckt, und einen langgestreckten Teil (5b), der die elektrischen Leitungen (4) bedeckt, und sich radial über die Außenfläche des Bodens und zumindest teilweise über die Seitenwand (2) des Gerätes erstreckt.

3. Gerät nach einem der Ansprüche 1 oder 2, **dadurch gekennzeichnet, dass** die Sonde (3) und die Leitungen (4) sich in einer Nut (6) befinden.

4. Gerät nach Anspruch 3, **dadurch gekennzeichnet, dass** sich die Nut (6) auf der Außenfläche der Wand, die den Boden (1) des Gerätes bildet, befindet.

5. Gerät nach einem der Ansprüche 1 bis 4, **dadurch gekennzeichnet, dass** sich der elektronische Kreis und die Mittel zur Temperaturanzeige in einem an dem Handgriff des Gerätes befestigten Gehäuse befinden.

6. Gerät nach Anspruch 5, **dadurch gekennzeichnet, dass** das Gehäuse lösbar an dem Handgriff befestigt ist.

## Claims

1. Cooking utensil comprising a bottom (1) and a side wall (2), a temperature sensor (3) integrated in the said bottom (1) connected to an electronic circuit in order to process the quantity measured by the sensor and to display the temperature, **characterized in that** the temperature sensor (3) and the electrical conductors (4) connecting this sensor to the electronic circuit extend between the wall which forms the bottom (1) of the utensil and a perforated plate (5) fastened by cold-pressing to the said wall.

2. Utensil according to Claim 1, **characterized in that** the said sensor (3) is located on the outer surface of the said bottom (1) close to the centre thereof, the said perforated plate (5) comprising a part (5a) which covers the said sensor (3) and a central part of the outer surface of the said bottom (1) and an elongated part (5b) which covers the said electrical conductors (4) and extends radially over the outer surface of the bottom and at least partially over the side wall (2) of the utensil.

3. Utensil according to either of Claims 1 and 2, **characterized in that** the sensor (3) and the conductors (4) are housed in a groove (6).

4. Utensil according to Claim 3, **characterized in that** the groove (6) is formed on the outer surface of the wall which forms the bottom (1) of the utensil.

5. Utensil according to one of Claims 1 to 4, **characterized in that** the electronic circuit and the means of displaying the temperature are housed in a casing (7) fastened to the handle (8) of the utensil.

6. Utensil according to Claim 5, **characterized in that** the said casing (7) is removably fastened to the said handle (8).
